(19) **Europäisches Patentamt**
**European Patent Office**
**Office européen des brevets**

(11) **EP 2 772 748 A1**

(12) **DEMANDE DE BREVET EUROPEEN**

(43) Date de publication:
**03.09.2014 Bulletin 2014/36**

(51) Int Cl.:
**G01N 15/14** *(2006.01)* **G01N 21/47** *(2006.01)*
**G02B 27/42** *(2006.01)*

(21) Numéro de dépôt: **14157305.5**

(22) Date de dépôt: **28.02.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.02.2013 FR 1351787**

(71) Demandeur: **Commissariat à l'Énergie Atomique et aux Énergies Alternatives
75015 Paris (FR)**

(72) Inventeurs:
• **Allier, Cédric**
**38000 GRENOBLE (FR)**
• **Navarro Y Garcia, Fabrice**
**38600 FONTAINE (FR)**
• **Poher, Vincent**
**62340 GUINES (FR)**
• **Pouteau, Patrick**
**38240 MEYLAN (FR)**

(74) Mandataire: **Blot, Philippe Robert Emile
Cabinet Lavoix
2, place d'Estienne d'Orves
75441 Paris Cedex 09 (FR)**

(54) **Procédé d'observation d'au moins un objet, tel qu'une entité biologique, et système d'imagerie associé**

(57) Ce procédé d'observation d'au moins un objet est mis en oeuvre à l'aide d'un système d'imagerie. Il comporte les étapes suivantes :
- l'éclairement (110), par une source de lumière, du ou des objets,
- l'acquisition (120), à l'aide d'un photodétecteur matriciel, d'une figure de diffraction, la figure de diffraction correspondant à une image des ondes diffractées par le ou les objets lorsqu'ils sont éclairés selon une direction d'éclairement,

le ou les objets, tels que des entités biologiques, étant disposés entre la source de lumière et le photodétecteur matriciel selon la direction d'éclairement.

Le procédé comprend en outre, préalablement à l'étape d'éclairement (110), l'ajout (100) d'au moins un marqueur au contact du ou des objets, le ou chaque marqueur étant apte à se fixer sur un objet correspondant, la fixation dudit marqueur sur ledit objet étant propre à augmenter au moins une grandeur caractéristique parmi l'absorption et le déphasage optique dudit objet.

**FIG.3**

EP 2 772 748 A1

**EP 2 772 748 A1**

**Description**

La présente invention concerne un procédé d'observation d'au moins un objet, tel qu'une entité biologique. Le procédé est mis en oeuvre à l'aide d'un système d'imagerie, et comporte l'éclairement du ou des objets par une source de lumière, et l'acquisition d'une figure de diffraction à l'aide d'un photodétecteur matriciel, la figure de diffraction correspondant à une image des ondes diffractées par le ou les objets lorsqu'ils sont éclairés selon une direction d'éclairement. Le ou les objets sont disposés entre la source de lumière et le photodétecteur matriciel selon la direction d'éclairement.

La présente invention concerne également un système d'imagerie comprenant une source de lumière propre à éclairer selon une direction d'éclairement au moins un objet, tel qu'une entité biologique, un photodétecteur matriciel propre à acquérir une figure de diffraction, la figure de diffraction correspondant à une image des ondes diffractées par le ou les objets lorsqu'ils sont éclairés selon ladite direction d'éclairement, et un support de réception du ou des objets, le support étant disposé entre la source de lumière et le photodétecteur matriciel selon la direction d'éclairement.

L'invention s'applique par exemple à la reconstruction d'une image d'un échantillon comportant les objets, notamment à la reconstruction de propriétés optiques des objets, tels que des entités biologiques, par exemple des cellules, des bactéries ou encore des virus. Ces entités biologiques, également appelées particules biologiques, présentent une taille de l'ordre de 10 $\mu$m pour les cellules et de l'ordre 1 $\mu$m pour les bactéries. L'échantillon baigne, par exemple, dans un milieu liquide contenu dans le support, le support étant disposé entre la source et le photodétecteur matriciel, le support comportant une surface transparente positionnée face au photodétecteur matriciel. En variante, l'échantillon est disposé sur le support au contact de l'air.

Par propriétés optiques, on entend notamment l'absorption de l'objet ou le déphasage optique introduit par chaque objet, le déphasage optique étant également appelé retard de phase, sachant que ces paramètres représentent respectivement le module et l'argument de la fonction d'opacité complexe de l'objet. L'invention permet notamment de déterminer la distribution spatiale de ces paramètres.

L'invention concerne l'imagerie sans lentille, également appelé imagerie de contact, c'est-à-dire l'acquisition, par le photodétecteur matriciel, d'images formées par le rayonnement transmis directement par l'échantillon, en l'absence d'une optique de grossissement disposée entre l'échantillon et le photodétecteur matriciel. Le photodétecteur matriciel est également appelé dans ce cas dispositif d'imagerie sans lentille, et apte à former une image de l'échantillon tout en étant placé à une faible distance de celui-ci. Par faible distance, on entend une distance comprise entre 100 $\mu$m et quelques centimètres, de préférence inférieure à 1 cm.

On connait un procédé du type précité de l'article « Lensfree super-resolution holographic microscopy using wetting films on a chip » d'O. Mudanyali, de W. Bishara et d'A. Ozcan, publié en 2011 dans la revue Optics Express. Cet article décrit l'imagerie sans lentille de particules biologiques, en particulier de particules biologiques présentant des dimensions inférieures à 0,5 $\mu$m, telles que des particules d'Escherichia coli, des spermatozoïdes, des trophozoïtes lamblia Gardia, ou encore des érythrocytes, également appelés globules rouges. Cet article décrit en particulier l'utilisation d'un film mouillant afin d'améliorer les images obtenues. Le film mouillant présente une très faible épaisseur, et est disposé au-dessus de l'échantillon contenant les particules biologiques.

Toutefois, les images des figures de diffraction acquises par le photodétecteur matriciel sont des images en champ large pour l'observation de milliers de particules, mais ne permettent pas de discriminer facilement les particules les unes par rapport aux autres.

Le but de l'invention est donc de proposer un procédé d'observation et un système d'imagerie permettant d'améliorer l'observation de certains objets de l'échantillon, tout en observant toujours des milliers d'objets à l'aide des images des figures de diffraction acquises.

A cet effet, l'invention a pour objet un procédé d'observation du type précité, dans lequel le procédé comprend en outre, préalablement à l'étape d'éclairement, l'ajout d'au moins un marqueur au contact du ou des objets, le ou chaque marqueur étant apte à se fixer sur un objet correspondant, la fixation dudit marqueur sur ledit objet étant propre à augmenter au moins une grandeur caractéristique parmi l'absorption et le déphasage optique dudit objet.

Suivant d'autres aspects avantageux de l'invention, le procédé d'observation comprend une ou plusieurs des caractéristiques suivantes, prises isolément ou suivant toutes les combinaisons techniquement possibles :

- la fixation dudit marqueur sur ledit objet est propre à augmenter l'absorption dudit objet d'au moins 1%, de préférence d'au moins 10% ;
- la fixation dudit marqueur sur ledit objet est propre à augmenter le déphasage optique dudit objet d'au moins $\pi/10$ radians ;
- le ou chaque marqueur est choisi parmi le groupe constitué de : un agent colorant, un agent fluorescent, une particule métallique et une particule organique ;
- le ou chaque marqueur présente une dimension, telle qu'un diamètre, de valeur inférieure à la moitié de la dimension correspondante, telle qu'un diamètre, du ou de chaque objet, de préférence inférieure au tiers de ladite dimension, de préférence encore inférieure au dixième de ladite dimension ;

2

- la distance entre le ou les objets et le photodétecteur matriciel selon la direction d'éclairement est inférieure à 10 mm, de préférence inférieure à 5 mm ;
- la source de lumière est une source de lumière spatialement cohérente ;
- le ou chaque objet présente une dimension, telle qu'un diamètre, de valeur inférieure à 1 mm, de préférence de valeur comprise entre 100 nm et 100 $\mu$m ;
- le procédé comprend en outre, après l'étape d'acquisition, la reconstruction de propriétés optiques du ou des objets suivant un algorithme de reconstruction à partir d'une intensité mesurée par le photodétecteur matriciel, l'algorithme de reconstruction étant fonction de la distance entre le ou les objets et le photodétecteur matriciel selon la direction d'éclairement ; et
- le procédé comprend en outre une étape de comptage des objets auxquels au moins un marqueur est fixé.

L'invention a également pour objet un système d'imagerie du type précité, dans lequel le support de réception comporte en outre au moins un marqueur agencé au contact du ou des objets, le ou chaque marqueur étant apte à se fixer sur un objet correspondant, la fixation dudit marqueur sur ledit objet étant propre à augmenter au moins une grandeur caractéristique parmi l'absorption et le déphasage optique dudit objet.

Les caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue en perspective d'un système d'imagerie selon l'invention,
- la figure 2 est une vue éclatée du système d'imagerie de la figure 1,
- la figure 3 est une représentation schématique du système d'imagerie de la figure 1, le système d'imagerie comprenant une source de lumière propre à éclairer un échantillon, disposé sur un support de réception, et un photodétecteur matriciel propre à établir une figure de diffraction transmise par l'échantillon éclairé,
- la figure 4 est un organigramme d'un procédé d'observation selon l'invention,
- la figure 5 est une image d'une figure de diffraction de l'échantillon, acquise suivant un procédé d'observation de l'état de la technique,
- la figure 6 est une image d'une figure de diffraction de l'échantillon, acquise suivant un procédé d'observation selon l'invention,
- la figure 7 est un agrandissement de la zone encadrée VII de la figure 5,
- la figure 8 est un agrandissement de la zone encadrée VIII de la figure 6,
- la figure 9 est un agrandissement, pour la zone correspondant à la zone encadrée VII de la figure 5, d'une image de l'échantillon obtenue par reconstruction suivant le procédé de l'état de la technique,
- la figure 10 est un agrandissement, pour la zone correspondant à la zone encadrée VIII de la figure 6, d'une image de l'échantillon obtenue par reconstruction suivant le procédé selon l'invention,
- la figure 11 est un agrandissement, pour la même zone que celle des figures 9 et 10, d'une image de référence de l'échantillon, obtenue à l'aide d'un système d'imagerie par fluorescence,
- la figure 12 est une vue de l'image de l'échantillon obtenue par reconstruction suivant le procédé selon l'invention, ladite vue comportant la zone encadrée X dont un agrandissement est représenté à la figure 10, et
- la figure 13 est une vue du support de réception selon un deuxième exemple de réalisation, le support comportant un premier puits comportant du sang lysé à observer suivant un procédé d'observation de l'état de la technique et un deuxième puits comportant du sang lysé et des marqueurs en forme de microbilles magnétiques à observer suivant le procédé d'observation selon l'invention,
- la figure 14 est une image de figures de diffraction de la zone encadrée XIV de la figure 13, acquises suivant le procédé d'observation de l'état de la technique,
- la figure 15 est une image de figures de diffraction de la zone encadrée XV de la figure 13, acquises suivant le procédé d'observation selon l'invention,
- la figure 16 est une image de la zone encadrée XIV de la figure 13, acquise avec un microscope,
- la figure 17 est une image de la zone encadrée XV de la figure 13, acquise avec le microscope,
- la figure 18 est un ensemble d'images concaténées de différentes zones du deuxième puits de la figure 13, acquises avec le microscope,
- la figure 19 est un ensemble d'images concaténées de figures de diffraction de différentes zones du deuxième puits de la figure 13, acquises suivant le procédé d'observation selon l'invention,
- la figure 20 est un ensemble d'agrandissements de motifs pointés par des flèches sur la figure 18,
- la figure 21 est un ensemble d'agrandissements de motifs pointés par des flèches sur la figure 19,
- la figure 22 est une image du deuxième puits de la figure 13, acquise suivant le procédé d'observation selon l'invention,
- la figure 23 est une image de référence,
- la figure 24 est une image de détection obtenue par seuil de à partir d'une autocorrélation entre l'image de la figure 22 et celle de la figure 23,

- la figure 25 est une vue du support de réception selon un troisième exemple de réalisation, le support comportant un premier puits comportant des macrophages à observer suivant un procédé d'observation de l'état de la technique et un deuxième puits comportant des macrophages et des marqueurs en forme de microbilles magnétiques à observer suivant le procédé d'observation selon l'invention,
- la figure 26 est un ensemble d'images de différentes zones du premier puits de la figure 25, acquises avec le microscope,
- la figure 27 est un ensemble d'images de figures de diffraction de différentes zones du premier puits de la figure 25, acquises suivant le procédé d'observation de l'état de la technique,
- la figure 28 est un ensemble de courbes en niveau de gris correspondant aux images de la figure 27,
- la figure 29 est un ensemble d'images de différentes zones du deuxième puits de la figure 25, acquises avec le microscope,
- la figure 30 est un ensemble d'images de figures de diffraction de différentes zones du deuxième puits de la figure 25, acquises suivant le procédé d'observation selon l'invention, et
- la figure 31 est un ensemble de courbes en niveau de gris correspondant aux images de la figure 30.

De façon conventionnelle, dans la présente demande, l'expression « sensiblement égale à » exprimera une relation d'égalité à plus ou moins 5%.

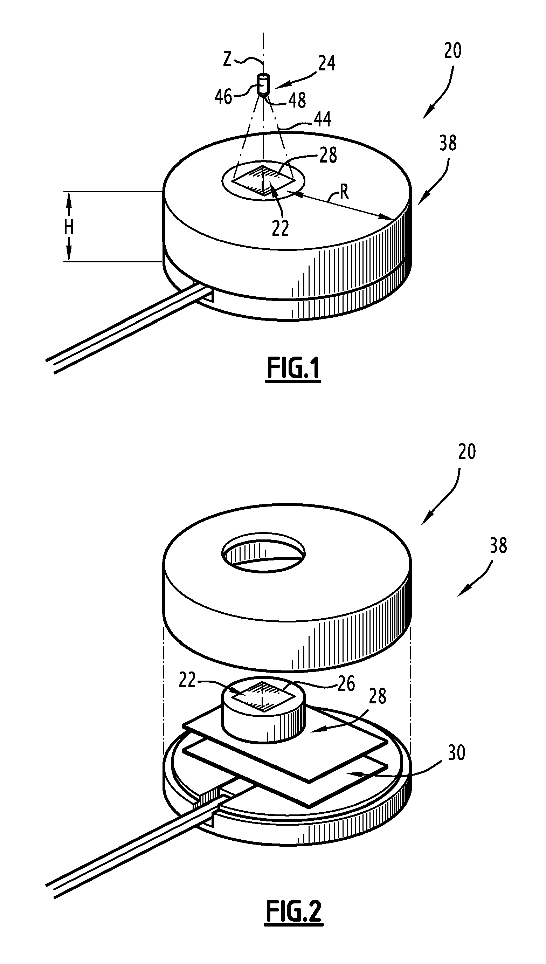

Sur la figure 1, un système d'imagerie 20 destiné à l'observation d'un échantillon 22 comprend une source de lumière 24 propre à éclairer l'échantillon 22 et un photodétecteur matriciel 26 propre à établir une figure de diffraction transmise par l'échantillon 22 éclairé selon une direction d'éclairement, par exemple une direction sensiblement verticale Z.

Le système d'imagerie 20 comprend un support 28 de réception de l'échantillon 22, le support de réception 28 étant disposé entre la source de lumière 24 et le photodétecteur matriciel 26 selon la direction d'éclairement Z. Le support de réception 28 est destiné à recevoir l'échantillon 22 à analyser.

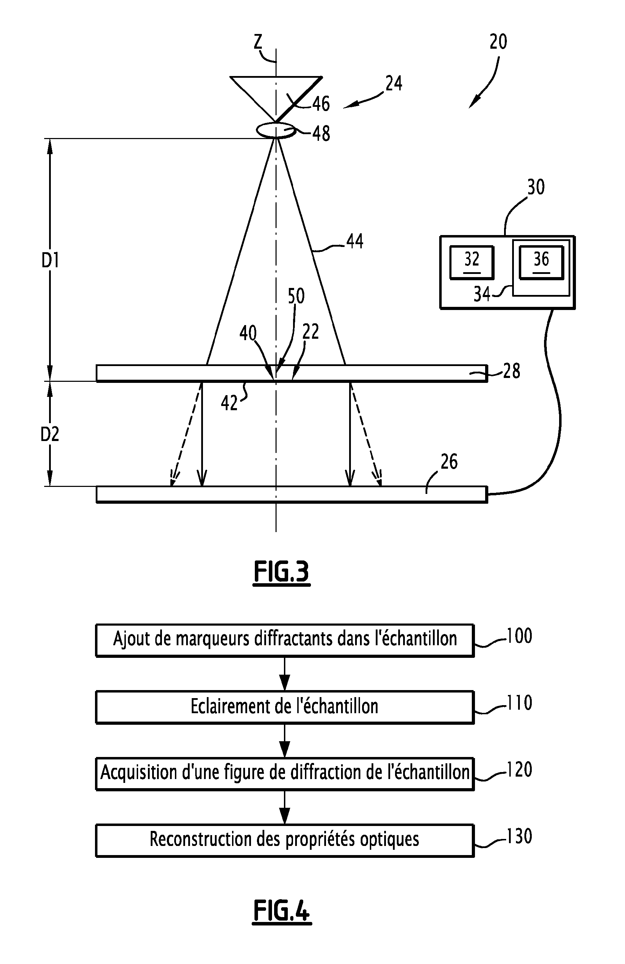

Le système d'imagerie 20 comprend également une unité de traitement d'informations 30, visible sur la figure 3, comportant un processeur 32 et une mémoire 34 apte à stocker un logiciel 36 de reconstruction des propriétés optiques de l'échantillon 22, les propriétés optiques étant reconstruites suivant un algorithme de reconstruction à partir d'une intensité I mesurée par le photodétecteur matriciel 26.

Le système d'imagerie 20 comprend un boîtier de protection 38, à l'intérieur duquel sont disposés notamment le photodétecteur matriciel 26 et l'unité de traitement d'informations 30, comme représenté sur la figure 2.

L'échantillon 22 comporte des objets 40, tels que des entités biologiques, également appelées particules biologiques, c'est-à-dire des cellules (par exemple des globules rouges, des globules blancs ou des plaquettes) ou agrégats de cellules, des bactéries ou colonies bactériennes, ou encore des virus.

L'échantillon 22 baigne, par exemple, dans un milieu liquide contenu dans le support 28, le support 28 comportant une surface transparente 42 et les objets 40 étant par exemple au contact de la surface transparente 42 du support. En variante, l'échantillon 22 est disposé sur le support 28 au contact de l'air, les objets 40 étant agencés sur la surface transparente 42 du support.

La source de lumière 24 est propre à émettre un faisceau lumineux 44 selon la direction d'éclairement, par exemple la direction verticale Z, afin d'éclairer l'échantillon 22 comprenant les objets 40. La direction d'éclairement est la direction selon laquelle l'échantillon 22 est éclairé par le faisceau lumineux 44. La direction d'éclairement n'est pas nécessairement la direction selon laquelle le faisceau lumineux 44 est issu de la source de lumière 24, notamment dans le cas où le faisceau lumineux 44 ne suit pas un trajet rectiligne depuis la source de lumière 24 jusqu'à l'échantillon 22, le faisceau lumineux 44 étant alors par exemple réfléchi par un miroir lors de son cheminement entre la source de lumière 24 et échantillon 22.

La source de lumière 24 est disposée à une première distance D1 du support de réception 28 selon la direction d'éclairement Z. La première distance D1 présente de préférence une valeur comprise entre 1 mm et 30 cm.

La source de lumière 24 est de préférence une source spatialement cohérente et comporte, par exemple, une source ponctuelle telle qu'une diode électroluminescente 46, également appelée LED (de l'anglais *Light-Emitting Diode*), et, avantageusement, un diaphragme 48 disposé au contact de la LED 46. Cela permet d'augmenter la cohérence spatiale du rayonnement lumineux. Lorsque la source de lumière 24 comporte la LED 46, la première distance D1 est, par exemple, égale à 5 cm.

En variante, la source de lumière 24 est une source de lumière spatialement et temporellement cohérente, telle qu'une diode laser (DL) ou encore une diode laser de type VCSEL (de l'anglais *Vertical Cavity Surface Emitting Laser).* La diode laser présente une longueur d'onde par exemple sensiblement égale à 670 nm. Lorsque la source de lumière 24 est une diode laser, la première distance D1 est, par exemple, égale à 1 cm. L'homme du métier notera que la valeur de la première distance D1, c'est-à-dire de la distance entre la source de lumière 24 et l'échantillon 22, n'a aucune incidence sur l'image de diffraction, étant donné que l'onde émise par la source de lumière 24 est une onde plane, et ce quelle que soit la position de la source de lumière 24.

En variante encore, la source de lumière 24 est constituée de la diode électroluminescente 46, et ne comporte pas de diaphragme. La diode électroluminescente 46 présente alors des dimensions suffisamment réduites pour être considérée comme spatialement cohérente, le diamètre de la diode électroluminescence 46 étant inférieur au dixième de la première distance D1 séparant cette diode électroluminescente 46 du support de réception 28.

Le photodétecteur matriciel 26 est propre à établir une figure de diffraction produite par l'échantillon 22, la ou chaque figure de diffraction correspondant à une image des ondes diffractées par un ou plusieurs objets 40, l'image étant formée au niveau du photodétecteur matriciel 26 lors de l'éclairement de l'échantillon 22. Plus précisément, chaque figure de diffraction comprend une image formée par les interférences des ondes diffractées par un objet. Le photodétecteur matriciel 26 et la source de lumière 24 sont situés de part et d'autre de l'échantillon 22 selon la direction d'éclairement Z.

Le photodétecteur matriciel 26 comporte une pluralité de pixels, non représentés. Chaque pixel du photodétecteur matriciel 26 présente des dimensions inférieures ou égales à 10 $\mu$m, voire 4 $\mu$m. Chaque pixel est, par exemple, en forme d'un carré dont le côté est de valeur inférieure ou égale à 10 $\mu$m, voire à 4 $\mu$m. En variante, chaque pixel est en forme d'un carré de 2,2 $\mu$m de côté.

Le photodétecteur matriciel 26 est disposé à une deuxième distance D2 du support de réception 28 selon la direction d'éclairement Z. La deuxième distance D2 présente une valeur comprise entre 100 $\mu$m et quelques centimètres, de préférence inférieure à 10 mm, de préférence inférieure à 5 mm, et de préférence encore comprise entre 200 $\mu$m et 2 mm. Dans l'exemple de réalisation décrit, la deuxième distance D2 est sensiblement égale à 500 $\mu$m.

Le fait de privilégier une deuxième distance D2 de faible valeur, c'est-à-dire une distance courte entre le photodétecteur matriciel 26 et le support de réception 28, permet de limiter les phénomènes d'interférence entre différentes figures de diffraction produites par différents objets lorsque l'échantillon 22 est éclairé.

Le photodétecteur matriciel 26 est un capteur d'images en deux dimensions, à savoir dans un plan perpendiculaire à la direction d'éclairement Z. Le photodétecteur matriciel 26 est un capteur d'images pixélisé, par exemple un capteur CMOS (de l'anglais *Complementary Metal-Oxyde Semiconductor).* En variante, le photodétecteur matriciel 26 est un capteur CCD (de l'anglais *Charged-Coupled Device).*

Le photodétecteur matriciel 26 comporte en complément des microlentilles, non représentées, chaque microlentille étant disposée au-dessus d'un pixel correspondant. De telles microlentilles sont intégrées au capteur. Elles permettent d'améliorer le rendement de collecte et ne forment pas une optique de grossissement disposée entre le support de réception 28 et le photodétecteur matriciel 26.

Les images acquises par le photodétecteur matriciel 26 sont formées par le rayonnement transmis directement par l'échantillon 22, en l'absence d'une optique de grossissement disposée entre le support de réception 28 et le photodétecteur matriciel 26. Le photodétecteur matriciel 26 est également appelé dispositif d'imagerie sans lentille, et est apte à former une image de l'échantillon 22, tout en étant placé à une faible distance de ce dernier. Par faible distance, on entend, comme indiqué précédemment, une distance inférieure à quelques centimètres, de préférence inférieure à 1 cm, la deuxième distance D2 étant par exemple égale à 500 $\mu$m.

Le support de réception 28 comporte la surface transparente 42 supportant l'échantillon 22. La première distance D1 correspond alors à la distance entre la source de lumière 24 et la surface transparente 42 selon la direction d'éclairement Z. La deuxième distance D2 correspond alors à la distance entre le photodétecteur matriciel 26 et la surface transparente 42 selon la direction d'éclairement Z.

Le support de réception 28 est disposé entre la source de lumière 24 et le photodétecteur matriciel 26, et la surface transparente 42 est sensiblement perpendiculaire à la direction d'éclairement Z correspondant à la direction d'éclairement de l'échantillon 22 par la source de lumière 24, comme représenté sur la figure 3.

Le support de réception 28 comporte en outre, selon l'invention, au moins un marqueur 50 agencé au contact du ou des objets 40, le ou chaque marqueur 50 étant apte à se fixer sur un objet 40 correspondant, la fixation dudit marqueur 50 sur ledit objet 40 étant propre à augmenter au moins une grandeur caractéristique parmi l'absorption et le déphasage optique dudit objet 40. De préférence, il s'agit d'un marquage spécifique à l'objet 40 destiné à être analysé, le marquage de l'objet consistant à adjoindre à l'objet 40 une molécule, une particule, une cellule par couplage biologique.

Ainsi, d'une façon générale, l'échantillon 22 est éclairé selon une direction donnée, le photodétecteur matriciel 26 étant disposé perpendiculairement à ladite direction.

Le logiciel de reconstruction 36 est propre à reconstruire les propriétés optiques de l'échantillon 22, suivant un algorithme de construction, à partir de l'intensité mesurée I

Un exemple d'algorithme de reconstruction, connu en soi, et vérifie l'équation suivante :

$$I(x, y) * h_{-Zr}(x, y) = e^{j2\pi\frac{-Zr}{\lambda}}\left(1 - a(x, y) - e^{j2\pi\frac{2Zr}{\lambda}}.a^*(x, y) * h_{-2Zr}(x, y)\right) \qquad (1)$$

où I représente l'intensité mesurée par le photodétecteur matriciel 26,

x, y représentent les coordonnées dans un plan perpendiculaire à la direction verticale Z, * désigne le produit de convolution,

Zr représente une hauteur de reconstruction,

À représente la longueur d'onde de la source de lumière 24, j représente le nombre imaginaire unitaire,

a représente la fonction d'opacité complexe d'un objet 40, a* représente le complexe conjugué de a, et

$h_z$ est défini par l'équation suivante :

$$h_z(x, y) = \frac{1}{j\lambda z}e^{j2\pi\frac{z}{\lambda}}\exp(j\pi\frac{x^2 + y^2}{\lambda z}).\qquad (2)$$

L'équation (1) est obtenue à l'aide des équations suivantes :

$$A_z(x, y) = t(x, y) * h_z(x, y) \qquad (3)$$

où Az est la transformée de Fresnel de la transmittance t(x,y).

Un coefficient de transmission t(x,y) est alors défini de la manière suivante :

$$t(x, y) = (1 - a(x, y)) \qquad (4)$$

$$A_z(x, y) = t(x, y) * h_z(x, y) = (1 - a(x, y)) * h_z(x, y)$$
$$= 1 * h_z(x, y) - a(x, y) * h_z(x, y) = e^{j2\pi\frac{z}{\lambda}} - a(x, y) * h_z(x, y) \qquad (5)$$

L'intensité I est alors définie de la manière suivante :

$$I = A.A^* = 1 - e^{j2\pi\frac{z}{\lambda}}.a^* * h_z^* - e^{-j2\pi\frac{z}{\lambda}}.a * h_z + (a * h_z).(a^* * h_z^*) \qquad (6)$$

Les propriétés duales de la transformée de Fresnel correspondant aux équations suivantes :

$$h_z^* * h_z = h_{-z} * h_z$$
$$h_z * h_z = h_{2z} \qquad (7)$$

permettent alors d'obtenir l'équation de reconstruction (1) :

$$I * h_{-z} \approx \left( 1 - e^{j2\pi\frac{z}{\lambda}}.a^* * h_z^* - e^{-j2\pi\frac{z}{\lambda}}.a * h_z \right) * h_{-z}$$

$$I * h_{-z} = e^{j2\pi\frac{-z}{\lambda}} - e^{j2\pi\frac{z}{\lambda}}.a^* * h_z^* * h_{-z} - e^{-j2\pi\frac{z}{\lambda}}.a * h_z * h_{-z}$$

$$I * h_{-z} = e^{j2\pi\frac{-z}{\lambda}} - e^{j2\pi\frac{z}{\lambda}}.a^* * h_{-z} * h_{-z} - e^{-j2\pi\frac{z}{\lambda}}.a \qquad (8)$$

$$I * h_{-z} = e^{j2\pi\frac{-z}{\lambda}} \left( 1 - a - e^{j2\pi\frac{2z}{\lambda}}.a^* * h_{-2z} \right)$$

La hauteur de reconstruction Zr correspond à la distance entre le photodétecteur matriciel et l'objet analysé.

Selon une variante, lorsque les objets analysés sont placés au contact de la paroi transparente 42, la hauteur de reconstruction Zr présente, par exemple, une valeur strictement inférieure à celle de la deuxième distance D2 entre la surface transparente 42 et le photodétecteur matriciel 26 selon la direction d'éclairement Z. La hauteur de reconstruction Zr est de préférence inférieure à 0,9 fois la deuxième distance D2, de préférence encore inférieure à 0,8 fois la deuxième distance D2.

Le boitier de protection 38 est, par exemple, en forme d'un cylindre, comme représenté sur les figures 1 et 2. Le boitier de protection 38 présente une hauteur H selon la direction verticale Z, et un rayon R selon une direction radiale perpendiculaire à la direction verticale Z. La hauteur H et le rayon R du boitier 38 sont, par exemple, centimétriques.

Les objets 40 présentent une taille inférieure à 1 mm, de préférence comprise entre 100 nm et 100 $\mu$m. La taille des objets 40 correspond à leur plus grande dimension selon une direction donnée. Lorsque les objets 40 sont en forme d'une sphère, la taille des objets 40 est égale au diamètre de la sphère correspondante. Les bactéries présentent un diamètre de l'ordre de 1 $\mu$m et les cellules présentent un diamètre de l'ordre de 10 $\mu$m.

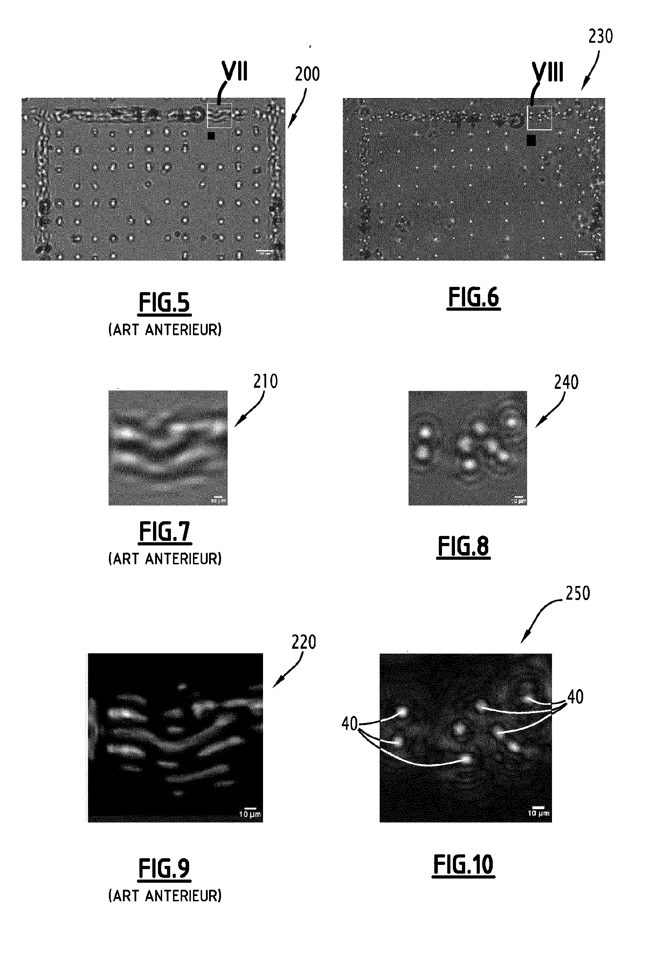

La taille de l'objet 40 est généralement comprise entre 0,1 et 25 fois la longueur d'onde À du faisceau 44 produit par la source de lumière 24. Dans l'exemple des figures 5 à 12, la longueur d'onde À du faisceau 44 est égale à 555 nm, et la taille des objets 40 est de l'ordre de 10 $\mu$m, c'est-à-dire égale à environ 20 fois la longueur d'onde À.

Les objets 40 sont, par exemple, des entités biologiques, telles que des bactéries ou autres micro-organismes, ou encore des cellules, comme cela a été décrit précédemment. Les cellules sont, par exemple, des cellules sanguines, c'est-à-dire des globules rouges ou des globules blancs, des thrombocytes ou encore toutes autres cellules présentes dans un fluide biologique.

La surface transparente 42 est, par exemple, en forme d'une lame transparente, présentant une épaisseur sensiblement égale à 170 $\mu$m selon la direction d'éclairement Z.

Le faisceau lumineux 44 est propre à éclairer directement l'échantillon 22, en l'absence d'une optique de grossissement disposée entre la source de lumière 24 et le support de réception 28.

La diode électroluminescente 46 est, par exemple, monochromatique avec une bande passante de largeur par exemple comprise entre 1 nm et 40 nm, de préférence égale à 5 nm. La diode électroluminescence 46 présente, par exemple, une longueur d'onde d'émission comprise entre 500 nm et 600 nm et une puissance de l'ordre du Watt.

Le diaphragme 48 a un diamètre compris entre 50 $\mu$m et 500 $\mu$m, et est placé au contact de la source de la LED 46.

Chaque marqueur 50 est choisi parmi le groupe constitué de : un agent colorant, un agent fluorescent, une particule métallique et une particule organique.

Lorsque le marqueur 50 est un agent fluorescent, il s'agit, par exemple, du 4',6-diamidino-2-phénylindole, également appelé DAPI.

Lorsque le marqueur 50 est une particule métallique, c'est-à-dire une particule inorganique de type métallique, il s'agit par exemple, de particules d'or, de particules de platine, ou encore de billes magnétiques. Les billes magnétiques sont, par exemple, des nanoparticules magnétiques, en particulier celles commercialisées par la société Miltenyi Biotec avec la référence 130-045-801.

Enfin, lorsque le marqueur 50 est une particule organique, il s'agit par exemple, de particules polymériques, de micelles, de particules lipidiques de type nano-émulsions, ou encore de liposomes encapsulant un agent de contraste. L'agent de contraste est, par exemple, un fluorophore, un colorant, une particule nanométrique semi-conductrice, également appelée nanocrystal (de l'anglais *quantum dot),* ou encore un complexe métallique.

La fixation du marqueur 50 sur l'objet 40 correspondant est propre à augmenter l'absorption dudit objet 40 d'au moins 1%, de préférence d'au moins 10%, notamment lorsque le marqueur 50 est un agent colorant ou un agent fluorescent.

La fixation du marqueur 50 sur l'objet 40 correspondant est propre à augmenter le déphasage, c'est-à-dire le retard de phase, dudit objet 40 d'au moins $\pi/10$ radians, notamment lorsque le marqueur 50 est une particule métallique ou une particule organique.

Chaque marqueur 50 présente une taille de valeur inférieure à la moitié de la taille de l'objet 40 correspondant, de préférence inférieure au tiers de ladite taille, de préférence encore inférieure au dixième de ladite taille. La taille de chaque marqueur 50 correspond à sa plus grande dimension selon une direction donnée. Lorsque le marqueur 50 est en forme d'une sphère, la taille du marqueur 50 est égale au diamètre de la sphère correspondante.

Chaque marqueur 50 est fonctionnalisé pour être apte à se fixer sur un objet 40 correspondant. Autrement dit, le marqueur 50 présente une affinité spécifique avec l'objet 40 à marquer. Il s'agit par exemple d'une affinité chimique, d'une affinité électrostatique, ou encore d'une affinité de forme.

La fonctionnalisation du marqueur 50 permet de renforcer de manière spécifique le pouvoir diffractant de l'objet 40 par rapport au milieu environnant (fluide, autres objets), c'est-à-dire d'augmenter au moins une grandeur caractéristique parmi l'absorption et le déphasage optique dudit objet 40. Le marqueur 50 est alors également appelé marqueur diffractant. En effet, la fonctionnalisation du marqueur 50 permet d'obtenir une forte concentration de ce dernier à la surface de l'objet 40 par rapport au milieu environnant.

La fonctionnalisation du marqueur 50 est, par exemple, obtenue en greffant un agent de ciblage, tel qu'un oligonucléotide, un polynucléotide, une protéine (par exemple un anticorps), ou encore un fragment d'ADN ou d'ARN. L'agent de ciblage est susceptible d'interagir, par exemple par complexation ou par hybridation, avec une molécule de l'objet 40. La greffe de l'agent de ciblage sur le marqueur 50 permet d'établir une affinité chimique avec l'objet 40 à marquer.

En variante, le marqueur 50 est une particule apte à se fixer à l'objet 40 via une force électrostatique. Ces particules présentant une affinité électrostatique avec l'objet 40 à marquer sont par exemple des particules MagPrep® Silica MS commercialisées par la société Merck Millipore avec la référence 1016440001 ou 1016440005.

En variante, le marqueur 50 est un matériau à empreinte moléculaire propre à prendre une forme complémentaire d'au moins une partie de l'objet 40 afin d'établir une affinité de forme avec ladite partie de l'objet 40 à marquer.

Lorsque les objets 40 sont des globules blancs avec l'antigène CD45, les marqueurs 50 sont par exemple des particules d'isothiocyanate de fluorescéine couplées à un anticorps spécifique de l'antigène CD45, l'isothiocyanate de fluorescéine étant un fluorophore. Ces particules d'isothiocyanate de fluorescéine couplées à l'anticorps spécifique de l'antigène CD45 sont commercialisées par exemple par la société Becton Dickinson (BD) avec la référence 555482, ou par la société Miltenyi Biotec avec la référence 130-098-043, ou encore par la société AbD Serotec du groupe Bio-Rad avec la référence MCA87F. En variante, lorsque les objets 40 sont des globules blancs avec l'antigène CD45, les marqueurs 50 sont des nanoparticules magnétiques, commercialisées par exemple par la société Miltenyi Biotec avec la référence 130-045-801. En variante encore, lorsque les objets 40 sont des globules blancs avec l'antigène CD45, les marqueurs 50 sont des microparticules fluorescentes Q655 commercialisées par exemple par la société Invitrogen avec la référence Q22154.

Lorsque les objets 40 sont des plaquettes avec l'antigène CD61, les marqueurs 50 sont par exemple des particules d'isothiocyanate de fluorescéine couplées à un anticorps spécifique de l'antigène CD61, telles que celles commercialisées par la société Becton Dickinson (BD) avec la référence 555753, ou par la société AbD Serotec avec la référence MCA2588F, ou encore par la société Abcam avec la référence ab78447. En variante, lorsque les objets 40 sont des plaquettes avec l'antigène CD61, les marqueurs 50 sont des nanoparticules, commercialisées par exemple par la société Miltenyi Biotec avec la référence 130-051-101.

Le procédé de reconstruction selon l'invention va être à présent décrit à l'aide de la figure 4.

Lors de l'étape initiale 100, le ou les marqueurs 50 sont ajoutés dans l'échantillon 22, le ou chaque marqueur 50 étant apte à se fixer sur un objet 40 correspondant de par l'affinité entre chaque marqueur 50 et l'objet 40 correspondant, tel que décrit précédemment.

Lors de l'étape suivante 110, l'échantillon 22 est éclairé à l'aide de la source de lumière 22, le faisceau lumineux 44 étant dirigé suivant la direction d'éclairement Z lorsqu'il éclaire l'échantillon 22.

L'intensité I du rayonnement transmis par l'échantillon éclairé 22 est alors mesurée lors de l'étape 120 par le photodétecteur matriciel 26. Plus précisément, le photodétecteur matriciel 26 mesure l'intensité I des figures de diffraction transmises par l'échantillon éclairé 22, chaque figure de diffraction correspondant à des ondes diffractées par les objets 40 lors de l'éclairement de l'échantillon 22, certains objets 40 étant en outre associés à un ou plusieurs marqueurs 50 correspondants. Les ondes diffractées interfèrent avec l'onde incidente.

Les propriétés optiques, notamment l'absorption et le retard de phase, également appelé déphasage, des objets 40 sont enfin reconstruites, lors de l'étape 130, à l'aide des moyens de reconstruction 36, suivant l'algorithme de reconstruction décrit précédemment et à partir de l'intensité mesurée I. Le retard de phase correspond à l'argument de la fonction d'opacité complexe a ; l'absorption correspond au module de la fonction d'opacité complexe a précédemment définie. D'une façon générale, une image de reconstruction représente la distribution spatiale de l'absorption ou du retard de phase.

Dans l'exemple des figures 5 à 12, la diode électroluminescence 46 présente une longueur d'onde d'émission égale à 555 nm et une puissance égale à 1,7 W. La première distance D1 est sensiblement égale à 5 cm et la deuxième distance D2 sensiblement égale à 500 μm.

Dans l'exemple des figures 5 à 12, les objets 40 sont des cellules fibroblastes, à savoir des cellules NIH3T3 référence ATCC CRL 1658, cultivées en milieu complet à base d'un milieu de Eagle modifié, également appelé DMEM (de l'anglais *Dulbecco Modified Eagle Medium),* comprenant 1% d'antibiotiques, à savoir de Pénicilline et de Streptomycine (commercialisée par la société Gibco) et 10% de sérum de voeu nouveau-né (commercialisé par la société Pan Biotech). 60 000 cellules NIH3T3 sont ainsi fixées sur une lame transparente, telle qu'une lame commercialisée par la société Cytoo Chips, la lame étant ensuite placée en incubateur pendant 3 heures à 37°C.

Dans l'exemple des figures 6, 8, 10 et 12, les cellules fibroblastes NIH3T3 ont en outre été marquées par une solution comportant du 4',6-diamidino-2-phénylindole (DAPI), commercialisé par exemple par la société Invitrogen avec la référence P36931. Autrement dit, dans l'exemple de réalisation des figures 6, 8, 10 et 12, les marqueurs sont des molécules de 4',6-diamidino-2-phénylindole (DAPI).

La figure 5 représente une image 200 de figures de diffraction correspondant aux cellules 40 avant ajout de la solution comportant du DAPI, c'est-à-dire acquise suivant un procédé d'observation de l'état de la technique, la figure 7 est un agrandissement 210 de la zone encadrée VII de la figure 5, et la figure 9 est un agrandissement 220, pour la zone correspondant à la zone encadrée VII de la figure 5, de l'image obtenue par reconstruction, à partir de l'image 200, à l'aide du logiciel de reconstruction 36 et suivant les équations (1) à (8) précédentes.

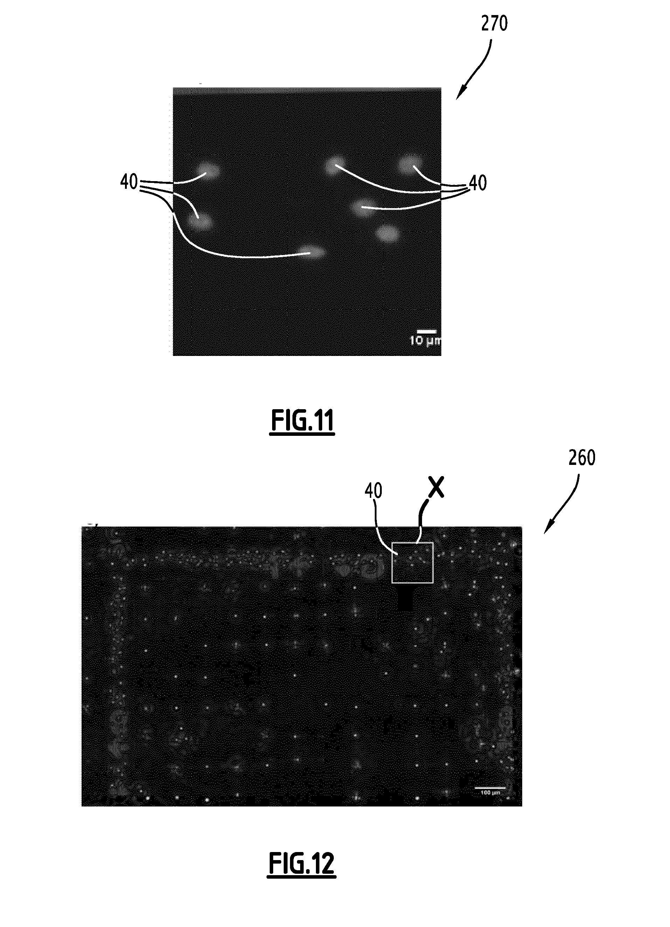

La figure 6 représente une image 230 de figures de diffraction correspondant aux cellules 40 après ajout de la solution comportant du DAPI, c'est-à-dire acquise suivant un procédé d'observation selon l'invention, la figure 8 est un agrandissement 240 de la zone encadrée VIII de la figure 6, et la figure 10 est un agrandissement 250, pour la zone correspondant à la zone encadrée VIII de la figure 6, de l'image 260 obtenue par reconstruction, à partir de l'image 230, à l'aide du logiciel de reconstruction 36 et suivant les équations (1) à (8) précédentes. La figure 10 est un agrandissement de la zone encadrée X de la figure 12, la figure 12 représentant l'image 260 obtenue par reconstruction à partir de l'image 230.

Autrement dit, les figures 5, 7 et 9 ont été réalisées avant l'ajout des marqueurs au contact des cellules 40, c'est-à-dire suivant le procédé de l'état de la technique, et les figures 6, 8, 10 et 12 ont été réalisées après l'ajout des marqueurs au contact des cellules 40, c'est-à-dire suivant le procédé d'observation selon l'invention.

La comparaison des figures 7 et 8 montre alors très distinctement que les figures de diffraction réalisées après marquage suivant le procédé selon invention sont mieux définies que les figures de diffraction réalisées avant marquage suivant le procédé de l'état de la technique.

Les figures de diffraction réalisées suivant le procédé selon l'invention permettent alors notamment de localiser, de dénombrer et de mesurer les noyaux des cellules 40.

La figure 11 est un agrandissement 270, pour la même zone que celle des figures 9 et 10, d'une image de référence de l'échantillon 22, obtenue à l'aide d'un système d'imagerie par fluorescence.

La comparaison des figures 10 et 11 montre alors que l'image 260 reconstruite à partir de la figure de diffraction obtenue suivant le procédé selon invention est fidèle à l'image de référence obtenue par imagerie de fluorescence. La comparaison des figures 9 et 11 montre au contraire que l'image reconstruite à partir de la figure de diffraction obtenue suivant le procédé de l'état de la technique n'est pas exploitable lorsque la densité des cellules est trop élevée.

Dans l'exemple des figures 6, 8, 10 et 12, l'ajout de la solution comportant du DAPI, suivant le procédé selon invention, permet d'augmenter l'absorption des cellules 40 et le marquage des cellules 40 permet alors l'observation d'une figure de diffraction exploitable et spécifique des noyaux des cellules 40.

On conçoit alors que le procédé d'observation et le système d'imagerie 20 selon invention permettent d'améliorer l'observation de certains objets 40 de l'échantillon 22, tout en observant toujours des milliers d'objets 40 à l'aide des images des figures de diffraction.

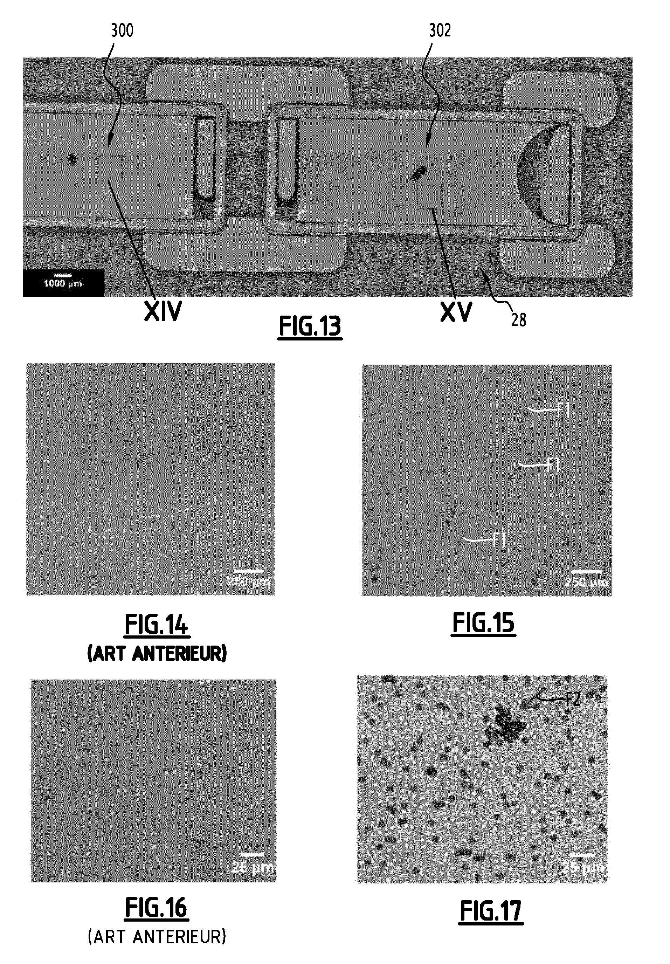

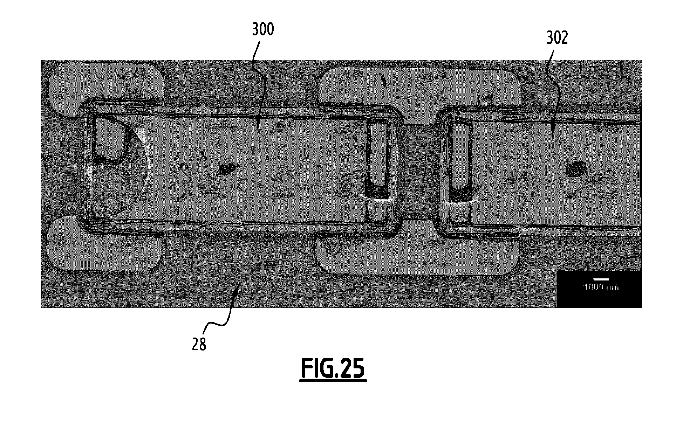

Les deux exemples de réalisation qui vont être décrits par la suite en regard des figures 13 à 24 d'une part, et des figures 25 à 31 d'autre part, montrent que l'ajout d'un marqueur diffractant 50 en forme de microbille se greffant sélectivement sur des objets 40, en particulier des lymphocytes, permet une observation sélective de ces objets 40 par imagerie sans lentille.

Le marqueur diffractant 50 en forme de microbille permet alors de mettre en oeuvre l'imagerie sans lentille pour des applications de type comptage ou ratios entre différents objets 40. Les applications concernent, par exemple, des diagnostics de pathologies, telles que le HIV, la tuberculose ou la malaria.

Un deuxième exemple de réalisation va être à présent décrit en regard des figures 13 à 24. Selon ce deuxième exemple de réalisation, l'échantillon 22 observé comporte du sang frais, qui a été conditionné dans des tubes, et les marqueurs 50 sont en forme de microbilles magnétiques, présentant par exemple un diamètre d'environ 4,5 μm.

On prélève alors 100 μL de sang qu'on incube pendant 10 min à +4°C dans 1 mL qsp d'eau ultrapure ($H_2O$ UP) pour lyser les globules rouges. Puis, les tubes sont centrifugés à 500 G pendant 5 minutes, le surnageant est éliminé (celui-ci contenant essentiellement des débris de globules rouges) et le culot repris dans 1,5 mL de tampon phosphate salin, également noté PBS (de l'anglais *Phosphate Buffered Saline)* Cette opération est répétée une fois.

Puis, on prépare un tube contenant 450 μL de cellules du sang lysé, provenant du culot précédent, avec 50 μl de marqueurs diffractants 50 en forme de billes magnétiques d'environ 4,5 μm de diamètre, fonctionnalisées avec un anticorps monoclonal de souris (IgG2a) anti-CD45, CD45 étant un marqueur de surface commun des leucocytes. Ces microbilles magnétiques fonctionnalisées sont par exemple commercialisées sous l'appellation Dynabeads® CD45 (Invitrogen™ 111.53D) par la société Life Technologies.

Du sang lysé non incubé avec les marqueurs diffractants 50 est utilisé en contrôle, 10 μl est distribué dans un premier puits 300 du support de réception 28, visible sur la figure 13, tel qu'une lame Invitrogen™, par exemple commercialisée sous la référence Countess® Cell Counting Chamber Slides par la société Life Technologies.

Après 30 min d'incubation à température ambiante sous faible agitation, un volume de 10 μl est prélevé et distribué dans un deuxième puits 302 du support de réception 28, visible sur la figure 13, pour observation au microscope et en imagerie sans lentille.

La figure 13 montre une acquisition par imagerie sans lentille du support de réception 28 sous forme de la lame Invitrogen™. Le support de réception 28 contient donc, dans le premier puits 300, 10μl d'une solution contenant du sang lysé, et dans le deuxième puits 302, 10 μl d'une même solution de sang lysé mais après marquage des lymphocytes par des marqueurs diffractants 50 en forme de microbilles magnétiques Dynabeads® CD45.

L'image est obtenue au moyen du système d'imagerie sans lentille 20 comportant le photodétecteur matriciel 26, tel qu'un capteur MT9J003 commercialisé par la société Aptina Imaging™ et la source de lumière 24, tel qu'un éclairage LED filtré à 534 nm ± 42nm. Le support de réception 28 en forme de lame a été scanné au moyen de deux platines M.ILS-100PP commercialisées par la société Newport Corporation, une image élémentaire étant obtenue à chaque position de la lame. Les images élémentaires réalisées sur une même lame sont alors juxtaposées, de façon à constituer une image finale. Les exemples représentés sur les figures 14 et 15 sont obtenues en constituant une mosaïque de 45 images élémentaires.

Les figures 14 et 15 montrent des détails des zones encadrées XIV et XV de la figure 13 obtenues par imagerie sans lentille. Comme indiqué précédemment, les figures 14 et 15 représentent respectivement des zones de sang lysé sans marqueurs diffractants 50 et avec marqueurs diffractants 50 en forme de microbilles magnétiques fonctionnalisées, telles que les microbilles Dynabeads® CD45.

Les figures 16 et 17 représentent des images obtenues respectivement, dans le premier puits 300 et le deuxième puits 302, à l'aide d'un microscope en transmission en utilisant un objectif avec un grossissement égal à 50. On observe de nombreux débris de globules rouges. Le champ d'observation de ces figures est plus faible que le champ d'observation des images obtenues par imagerie sans lentille.

Dans le premier puits 300 (figure 14), avec le procédé d'observation de l'état de la technique, l'acquisition obtenue par imagerie sans lentille ne permet pas de distinguer les objets 40, et en particulier les lymphocytes, ces derniers étant largement minoritaires dans l'échantillon 22 (1 pour 1000). Les différentes particules présentes dans l'échantillon 22 sont trop proches les unes des autres. Par conséquent, les taches de diffraction se mélangent. La figure 16, réalisée au microscope, confirme l'observation de débris de globules rouges.

Dans le deuxième puits 302 (figure 15), contenant selon l'invention des marqueurs diffractants 50 en forme de microbilles magnétiques fonctionnalisées, l'image obtenue par imagerie sans lentille révèle des motifs de diffraction se distinguant du fond de l'image, et n'étant pas présents dans l'image obtenue selon le procédé de l'état de la technique, sans marqueurs diffractants (figure 14). Ces motifs de diffraction sont repérés par des flèches F1 sur la figure 15. La figure 17, réalisée au microscope, confirme que des agrégats de microbilles se forment autour des lymphocytes marqués par les microbilles magnétiques fonctionnalisées (flèche F2), permettant ainsi de les distinguer des débris, microbilles et autres particules.

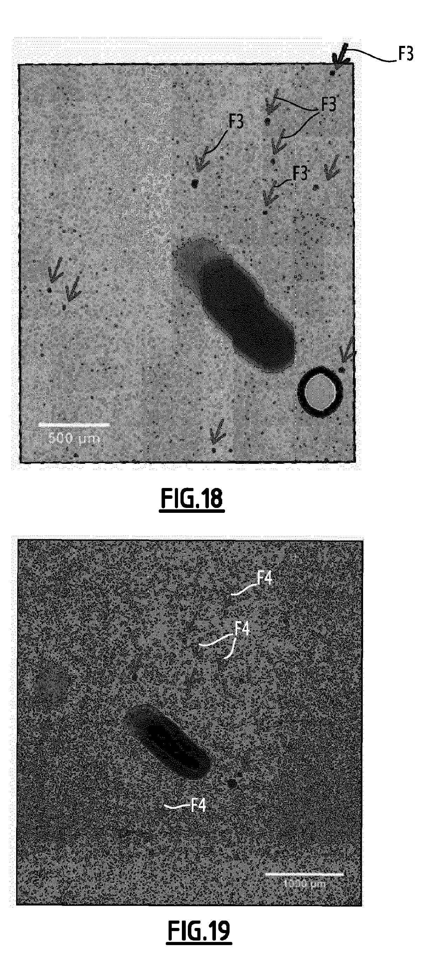

La mise en correspondance des acquisitions obtenues par imagerie sans lentille (figure 19) et microscopie de transmission (figure 18), montrent que les figures de diffraction détectées par imagerie sans lentille correspondent bien à des lymphocytes marqués par les microbilles magnétiques. Sur les figures 18 et 19, la tâche au centre de l'image correspond à une tâche d'encre, servant de point de repère.

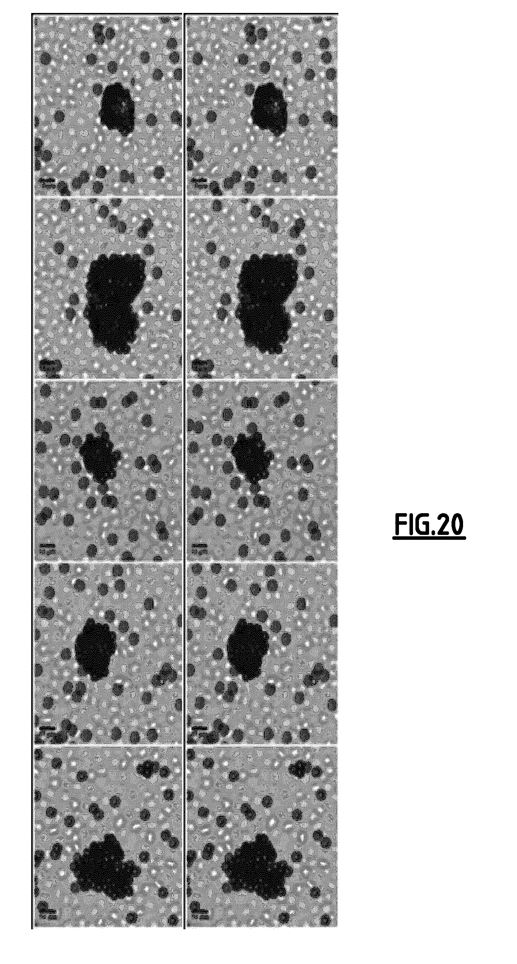

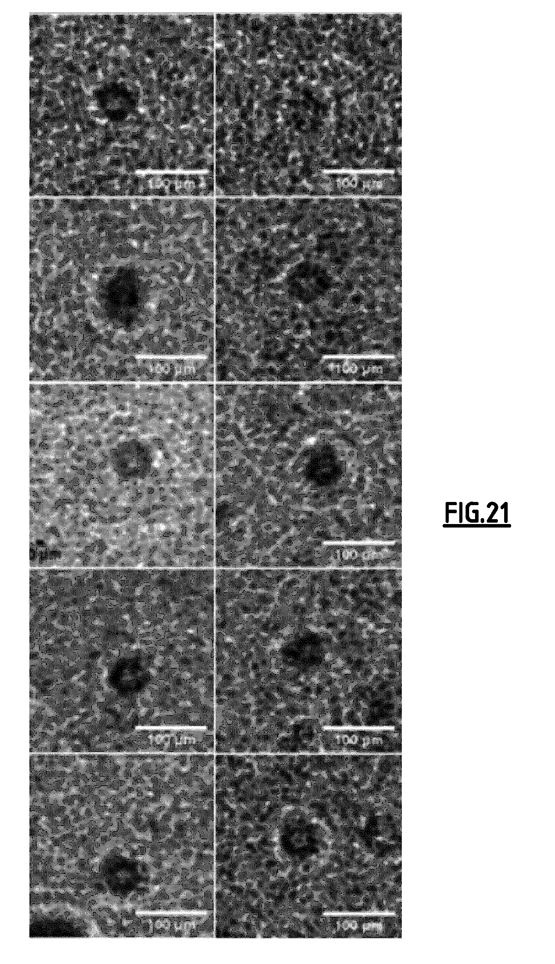

Tous les motifs pointés par des flèches F3 sur l'acquisition obtenue par microscopie de transmission sur la figure 18 sont détaillés dans la figure 20, et tous les motifs pointés par des flèches F4 sur l'acquisition obtenue par imagerie sans lentille sur la figure 19 sont détaillés dans la figure 21.

Les motifs pointés par les flèches F4 sur la figure 19 correspondent bien à des lymphocytes marqués par les marqueurs diffractants 50 en forme de microbilles magnétiques, comme le confirment les images de références obtenues par microscopie de transmission en utilisant un objectif avec un grossissement égal à 50, visibles sur les figures 18 et 20. La figure de diffraction enregistrée par l'imagerie sans lentille correspondant aux lymphocytes marqués par les marqueurs diffractants 50 en forme de microbilles présente un fort contraste malgré la présence dans son entourage de nombreuses particules.

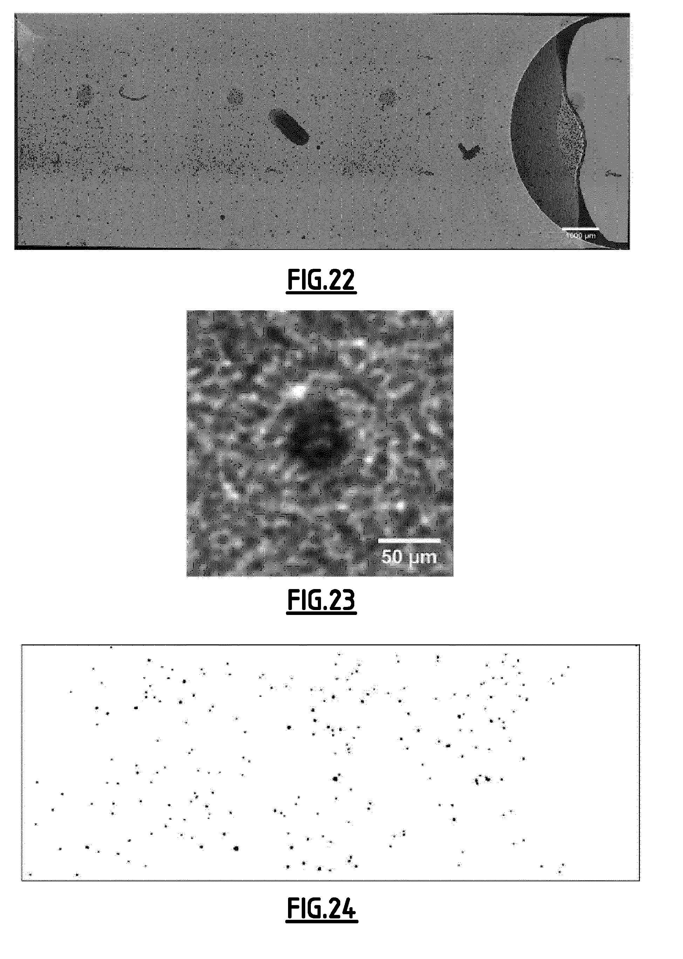

Il est possible de détecter manuellement ces figures de diffraction, révélant la présence d'une particule marquée. Pour une détection automatique, une méthode de traitement d'images connue en soi est mise en oeuvre, cette méthode comportant un seuillage de niveaux gris, ou une recherche d'une figure de référence dans l'image. Dans ce dernier cas, on opère une comparaison entre l'image acquise par le dispositif d'imagerie sans lentille (figure 22) et une figure de référence (figure 23), préalablement établie, cette dernière étant considérée comme représentative d'un motif de diffraction. Une autocorrélation normée entre ladite image acquise, $I_1$, visible sur la figure 22, et l'image de référence, $I_2$, visible sur la figure 23 est alors effectuée. Cela permet d'obtenir une image de corrélation, $I_3$, visible sur la figure 24, après un seuillage effectué à partir du résultat de l'autocorrélation. Sur cette dernière image, chaque pic d'intensité dans l'image de détection correspond à la position du centre de la figure de diffraction.

Si $I_1(x,y)$ et $I_2(i,j)$ désignent respectivement l'image observée et une figure de diffraction élémentaire de référence, l'application d'une fonction d'autocorrélation, de préférence normée, conduit à une image de corrélation $I_3(x,y)$ telle que

$$I_3(x,y) = \frac{\sum_{i,j} I_2(i,j) \times I_1(x+i,y+j)}{\sqrt{\sum_{i,j} I_2^2(i,j) \sum_{i,j} I_1^2(x+i,y+j)}}$$

(9)

Dans l'exemple des figures 22 à 24, la méthode de détection par autocorrélation normée amène la détection d'environ 230 lymphocytes marqués par marqueurs diffractants 50 en forme de microbilles.

Ainsi, ce deuxième exemple de réalisation montre que la mise en oeuvre du marquage diffractant, par greffage de microbilles magnétiques sur les lymphocytes, permet une détection efficace des lymphocytes par l'imagerie sans lentille, et ce au sein d'une solution de 10μl très complexe et inhomogène de sang lysé.

On comprend alors que le marquage des objets 40 avec des marqueurs diffractants 50 en forme de microbilles magnétiques permet de réaliser un comptage des objets 40 marqués.

Un troisième exemple de réalisation va être à présent décrit en regard des figures 25 à 31. Selon ce troisième exemple de réalisation, l'échantillon 22 observé comporte macrophages murins, et les marqueurs 50 sont également en forme de microbilles magnétiques, présentant par exemple un diamètre d'environ 4,5 μm.

Les macrophages murins, tels que des macrophages de la lignée J774A.1, sont maintenus en culture dans un incubateur à atmosphère contrôlée, avec un taux d'humidité égal à 95% et 5% de dioxyde de carbone. A confluence, c'est-à-dire lorsque les macrophages recouvrent le support de culture, les macrophages sont prélevés du support par grattage. Environ 250 000 cellules de macrophages sont déposées dans un tube d'1,5 mL contenant du tampon phosphate salin PBS.

Les cellules sont incubées pendant 30 minutes sous faible agitation en présence d'une dilution au 1/10e de marqueurs diffractants 50 en forme de microbilles magnétiques fonctionnalisées, telles que les microbilles Dynabeads® CD45 (Invitrogen™ 111.53D) commercialisées par la société Life Technologies.

Après l'incubation, une dilution au 1/100 dans du PBS est réalisée. Un volume de 10 μL est alors distribué dans le deuxième puits 302 du support de réception 28, visible sur la figure 25, tel qu'une lame Invitrogen™, par exemple commercialisée sous la référence Countess® Cell Counting Chamber Slides par la société Life Technologies, pour observation au microscope et en imagerie sans lentille. La dilution permet de réduire le nombre de cellules à l'observation. Une solution de macrophages non incubés avec les marqueurs diffractants est utilisé en contrôle, 10 μl est distribué dans le premier puits 300 du support de réception 28, visible sur la figure 25.

La figure 25 montre une acquisition par imagerie sans lentille du support de réception 28 en forme de lame. Le support de réception 28 contient donc, dans le premier puits 300, 10μl d'une solution contenant des macrophages, et dans le deuxième puits 302, 10 μl d'une même solution de macrophages mais après marquage des macrophages par des marqueurs diffractants 50 en forme de microbilles magnétiques Dynabeads® CD45.

L'image est obtenue au moyen du système d'imagerie sans lentille 20 comportant le photodétecteur matriciel 26, tel qu'un capteur MT9J003 de la société Aptina Imaging™, et la source de lumière 24, tel qu'un éclairage LED filtré à 610 nm ± 20nm. Le support de réception 28 en forme de lame a été scanné au moyen de deux platines M.ILS-100PP de la société Newport Corporation, une image élémentaire étant obtenue à chaque position de la lame.

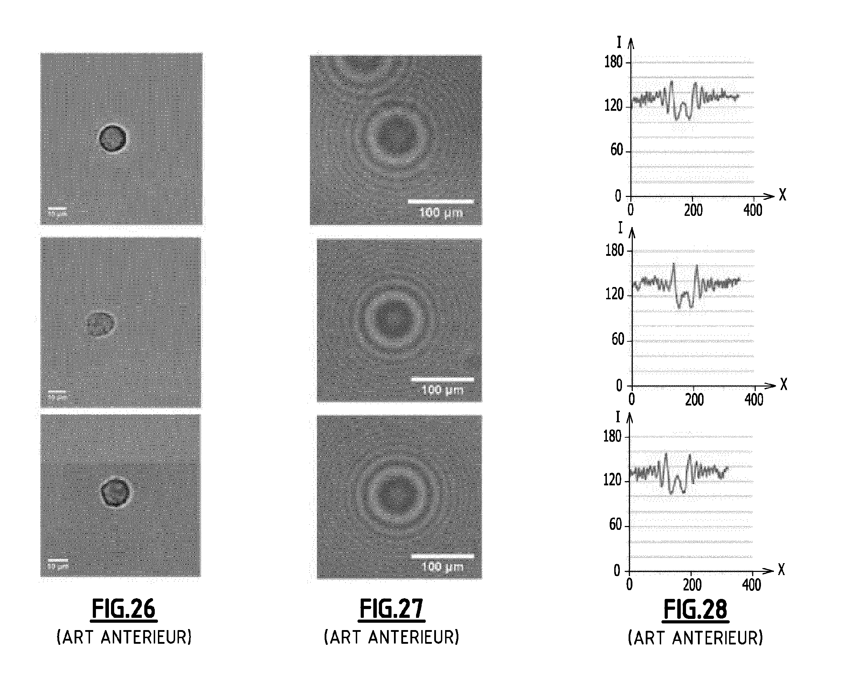

Les figures 27, et respectivement 30, présentent des macrophages observés sans marquage avec le procédé de l'état de la technique, et respectivement selon l'invention avec marquage des marqueurs diffractants 50 en forme de microbilles magnétiques Dynabeads CD45, ces différentes images étant obtenues par imagerie sans lentille.

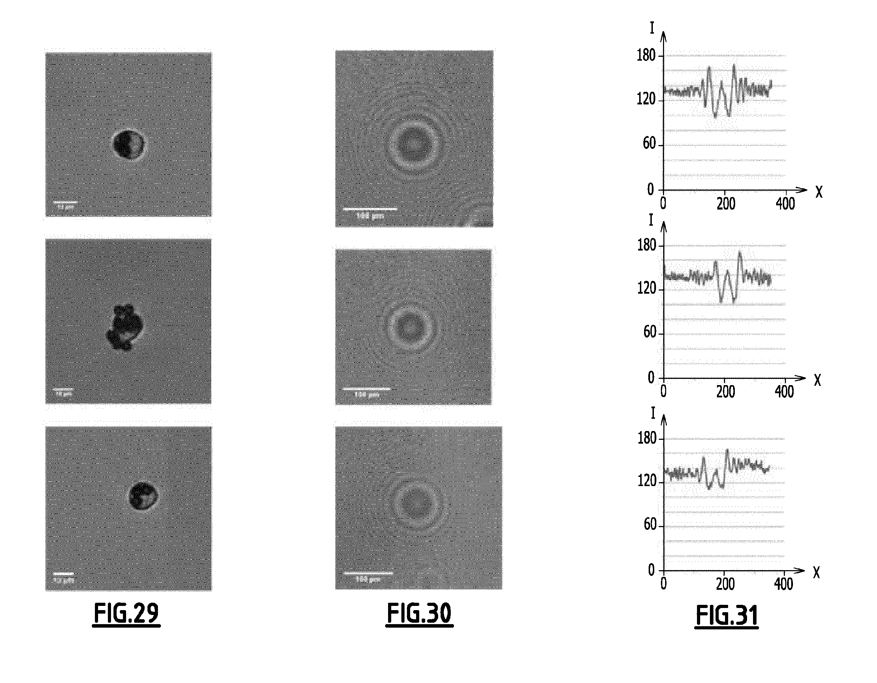

Les figures 26 et 29 sont obtenues en observant respectivement le premier puits 300 et le deuxième puits 302 à l'aide d'un microscope en transmission avec un objectif avec un grossissement égal à 50. Ces figures 26 et 29 montrent que les macrophages du premier puits 300 sont bien exempts de marqueurs diffractants alors que les macrophages du deuxième puits 302 comportent plusieurs marqueurs diffractants 50 en forme de microbilles magnétiques à la surface de la cellule.

En comparant les figures 27 et 30, on observe que les figures de diffraction sont différentes selon que les objets observés 40 sont marqués (figure 30) ou non (figure 27). Cette différence s'observe par exemple sur les profils des figures de diffraction, visibles sur la figure 28 pour le cas du premier puits 300 sans marqueurs, et sur la figure 31 pour le cas du deuxième puits 302 avec marqueurs diffractants 50 en forme de microbilles magnétiques. Les profils des figures de diffraction sont, sur les figures 28 et 31, représentés à chaque fois sous forme d'une courbe avec en ordonnée une intensité I exprimée en niveaux de gris en fonction d'une distance X, exprimée en $\mu$m, en abscisse.

Le pic central sur les profils des figures de diffraction est par exemple plus intense lorsque des objets 40 marqués avec les marqueurs diffractants 50 sont observés. Il est donc possible d'appliquer un seuil sur le niveau de gris central, par exemple une valeur de 130 dans l'exemple des figures 28 et 31, pour distinguer les objets 40 marqués avec les marqueurs diffractants 50 des objets 40 non marqués.

## Revendications

1.  Procédé d'observation d'au moins un objet (40), le procédé étant mis en oeuvre à l'aide d'un système d'imagerie (20) et comportant les étapes suivantes :

    - l'éclairement (110), par une source de lumière (24), du ou des objets (40),
    - l'acquisition (120), à l'aide d'un photodétecteur matriciel (26), d'une figure de diffraction, la figure de diffraction correspondant à une image des ondes diffractées par le ou les objets (40) lorsqu'ils sont éclairés selon une direction d'éclairement (Z),

    le ou les objets (40), tels que des entités biologiques, étant disposés entre la source de lumière (24) et le photodétecteur matriciel (26) selon la direction d'éclairement (Z),
    le procédé étant **caractérisé en ce qu'**il comprend en outre, préalablement à l'étape d'éclairement (110) :

    - l'ajout (100) d'au moins un marqueur (50) au contact du ou des objets (40), le ou chaque marqueur (50) étant apte à se fixer sur un objet (40) correspondant, la fixation dudit marqueur (50) sur ledit objet (40) étant propre à augmenter au moins une grandeur caractéristique parmi l'absorption et le déphasage optique dudit objet.

2.  Procédé selon la revendication 1, dans lequel la fixation dudit marqueur (50) sur ledit objet (40) est propre à augmenter l'absorption dudit objet d'au moins 1%, de préférence d'au moins 10%.

3.  Procédé selon la revendication 1 ou 2, dans lequel la fixation dudit marqueur (50) sur ledit objet (40) est propre à augmenter le déphasage optique dudit objet d'au moins $\pi/10$ radians.

4.  Procédé selon l'une quelconque des revendications précédentes, dans lequel le ou chaque marqueur (50) est choisi parmi le groupe constitué de : un agent colorant, un agent fluorescent, une particule métallique et une particule organique.

5.  Procédé selon l'une quelconque des revendications précédentes, dans lequel le ou chaque marqueur (50) présente une dimension, telle qu'un diamètre, de valeur inférieure à la moitié de la dimension correspondante, telle qu'un diamètre, du ou de chaque objet (40), de préférence inférieure au tiers de ladite dimension, de préférence encore inférieure au dixième de ladite dimension.

6.  Procédé selon l'une quelconque des revendications précédentes, dans lequel la distance (D2) entre le ou les objets (40) et le photodétecteur matriciel (26) selon la direction d'éclairement (Z) est inférieure à 10 mm, de préférence inférieure à 5 mm.

7.  Procédé selon l'une quelconque des revendications précédentes, dans lequel la source de lumière (24) est une source de lumière spatialement cohérente.

8.  Procédé selon l'une quelconque des revendications précédentes, dans lequel le ou chaque objet (40) présente une dimension, telle qu'un diamètre, de valeur inférieure à 1 mm, de préférence de valeur comprise entre 100 nm et 100 $\mu$m.

9.  Procédé selon l'une quelconque des revendications précédentes, dans lequel le procédé comprend en outre, après l'étape d'acquisition (120), la reconstruction (130) de propriétés optiques du ou des objets (40) suivant un algorithme de reconstruction à partir d'une intensité (I) mesurée par le photodétecteur matriciel (26), l'algorithme de reconstruction étant fonction de la distance (D2) entre le ou les objets et le photodétecteur matriciel (26) selon la direction d'éclairement (Z).

**10.** Procédé selon l'une quelconque des revendications précédentes, dans lequel le procédé comprend en outre une étape de comptage des objets (40) auxquels au moins un marqueur (50) est fixé.

**11.** Système d'imagerie (20) comprenant :

- une source de lumière (24) propre à éclairer au moins un objet (40),
- un photodétecteur matriciel (26) propre à acquérir une figure de diffraction, la figure de diffraction correspondant à une image des ondes diffractées par le ou les objets (40) lorsqu'ils sont éclairés selon une direction d'éclairement (Z),
- un support (28) de réception du ou des objets (40), tels que des entités biologiques, le support (28) étant disposé entre la source de lumière (24) et le photodétecteur matriciel (26) selon la direction d'éclairement (Z),

**caractérisé en ce que** le support de réception (28) comporte en outre au moins un marqueur (50) agencé au contact du ou des objets (40), le ou chaque marqueur (50) étant apte à se fixer sur un objet (40) correspondant, la fixation dudit marqueur (50) sur ledit objet (40) étant propre à augmenter au moins une grandeur caractéristique parmi l'absorption et le déphasage optique dudit objet.

**FIG.1**

**FIG.2**

**FIG.3**

| | |
|---|---|
| Ajout de marqueurs diffractants dans l'échantillon | 100 |
| Eclairement de l'échantillon | 110 |
| Acquisition d'une figure de diffraction de l'échantillon | 120 |
| Reconstruction des propriétés optiques | 130 |

**FIG.4**

**FIG.5**
(ART ANTERIEUR)

**FIG.6**

**FIG.7**
(ART ANTERIEUR)

**FIG.8**

**FIG.9**
(ART ANTERIEUR)

**FIG.10**

270

40 40

10 µm

**FIG.11**

260

40 X

100 µm

**FIG.12**

**FIG.13**

**FIG.14**
**(ART ANTERIEUR)**

**FIG.15**

**FIG.16**
(ART ANTERIEUR)

**FIG.17**

**FIG.18**

**FIG.19**

FIG.20

FIG.21

**FIG.22**

**FIG.23**

**FIG.24**

FIG.25

FIG.26
(ART ANTERIEUR)

FIG.27
(ART ANTERIEUR)

FIG.28
(ART ANTERIEUR)

EP 2 772 748 A1

**FIG.31**

**FIG.30**

**FIG.29**

Europäisches
Patentamt

European
Patent Office

Office européen
des brevets

## RAPPORT DE RECHERCHE EUROPEENNE

Numéro de la demande

EP 14 15 7305

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/162181 A2 (BRIGHAM & WOMENS HOSPITAL [US]; DEMIRCI UTKAN [US]; ZHANG XIAOHUI [US]) 29 novembre 2012 (2012-11-29) | 11 | INV. G01N15/14 G01N21/47 G02B27/42 |
| A | * page 11, ligne 16 - page 13, ligne 11; figure 1 * | 1-10 | |
| X | SUNGKYU SEO ET AL: "Lensfree holographic imaging for on-chip cytometry and diagnostics", LAB ON A CHIP, vol. 9, no. 6, 1 janvier 2009 (2009-01-01), page 777, XP055093847, ISSN: 1473-0197, DOI: 10.1039/b813943a | 11 | |
| A | * le document en entier * | 1-10 | |
| X | C P Allier: "Bacteria detection with thin wetting film lensless imaging", Biomed. Opt. Express, 1 janvier 2010 (2010-01-01), pages 762-770, XP055066537, Extrait de l'Internet: URL:http://www.opticsinfobase.org/DirectPDFAccess/5DB6B7F5-D7B6-6C9A-B226E05846421E77_205470/boe-1-3-762.pdf?da=1&id=205470&seq=0&mobile=no [extrait le 2013-06-13] | 11 | DOMAINES TECHNIQUES RECHERCHES (IPC) G01N G02B |
| A | * le document en entier * | 1-10 | |
| X | XIAOHUI ZHANG ET AL: "Lensless imaging for simultaneous microfluidic sperm monitoring and sorting", LAB ON A CHIP, vol. 11, no. 15, 1 janvier 2011 (2011-01-01), pages 2535-2540, XP055090272, ISSN: 1473-0197, DOI: 10.1039/c1lc20236g | 11 | |
| A | * le document en entier * | 1-10 | |

-/--

Le présent rapport a été établi pour toutes les revendications

| Lieu de la recherche | Date d'achèvement de la recherche | Examinateur |
|---|---|---|
| La Haye | 29 avril 2014 | Liefrink, Feike |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 14 15 7305

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SU TING-WEI ET AL: "High-throughput lensfree imaging and characterization of a heterogeneous cell solution on a chip", BIOTECHNOLOGY AND BIOENGINEERING, WILEY & SONS, HOBOKEN, NJ, US, vol. 102, no. 3, 15 février 2009 (2009-02-15), pages 856-868, XP002584870, ISSN: 0006-3592, DOI: 10.1002//BIT.22116 * le document en entier * ----- | 1-11 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 29 avril 2014 | Liefrink, Feike |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 7305

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2014

| Document brevet cité au rapport de recherche | Date de publication | Membre(s) de la famille de brevet(s) | Date de publication |
|---|---|---|---|
| WO 2012162181 A2 | 29-11-2012 | CA 2836774 A1<br>EP 2710139 A2<br>WO 2012162181 A2 | 29-11-2012<br>26-03-2014<br>29-11-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- Lensfree super-resolution holographic microscopy using wetting films on a chip. **D'O. MUDANYALI ; DE W. BISHARA ; D'A. OZCAN.** revue Optics Express. 2011